# EUROPÄISCHE PATENTSCHRIFT

(11) **EP 0 852 769 B1**
(45) Veröffentlichungstag und Bekanntmachung des Hinweises auf die Patenterteilung: **22.12.1999**
(21) Anmeldenummer: 96933403.6
(22) Anmeldetag: 26.09.1996
(51) Int. Cl.: G06F 17/60, G05B 19/418

(54) **VERFAHREN ZUR SITUATIONSABHÄNGIGEN DISPOSITION ÜBER BZW. AKTIVIERUNG VON RESSOURCEN**
METHOD FOR THE SITUATION-DEPENDENT ARRANGEMENT AND/OR ACTIVATION OF RESOURCES
PROCEDE PERMETTANT L'ORDONNANCEMENT ET/OU L'ACTIVATION DE RESSOURCES EN FONCTION DE LA SITUATION

(30) Priorität: 27.09.1995 DE 19539662
(43) Veröffentlichungstag der Anmeldung: 15.07.1998
(73) Patentinhaber: Halbländer, Stefan J., 68309 Mannheim (DE)
(72) Erfinder: Halbländer, Stefan J., 68309 Mannheim (DE)
(74) Vertreter: Stoffregen, Hans-Herbert, Dr. Dipl.-Phys.
(86) Internationale Anmeldenummer: EP9604212
(87) Internationale Veröffentlichungsnummer: WO9712335

(56) Entgegenhaltungen:
- EP-A- 0 644 470
- US-A- 5 053 970
- US-A- 5 325 292
- US-A- 5 369 570
- REVUE GENERALE DE L'ELECTRICITE, Nr. 1, 1.Januar 1989, Seiten 17-23, XP000096788 SAUVE B: "POUR L'ORDONNANCEMENT PREVISIONNEL ET DYNAMIQUE D'ATELIERS: SONIA"
- PROCEEDINGS OF THE INTERNATIONAL CONFERENCE ON SYSTEMS, MAN AND CYBERNETICS, LE TOUQUET, OCT. 17 - 20, 1993, Bd. 1, 17.Oktober 1993, INSTITUTE OF ELECTRICAL AND ELECTRONICS ENGINEERS, Seiten 536-541, XP000462499 REGNIER P ET AL: "A METHODOLOGY TO DESIGN A REACTIVE PRODUCTION MANAGEMENT SYSTEM 1993 IEEE SYSTEMS, MAN AND CYBERNETICS CONFERENCE"

## Beschreibung

Die Erfindung bezieht sich auf ein Verfahren zur situationsabhängigen automatischen Disposition über bzw. Aktivierung von Ressourcen für die Erledigung von Aufträgen.

Aus der US 5,369,570 ist ein entsprechendes Verfahren bekannt. Dabei sollen eine Anzahl von verketteten Ressourcen unter Einhaltung von Lieferterminen kontinuierlich und optimal ausgelastet werden. Die Auslastung der Ressourcen wird beim Starten des Systems für einen vorher definierbaren Zeitraum geplant.

Zur zeitlichen Disposition komplexer Arbeitsabläufe werden Techniken angewendet, mit denen die Einzeltätigkeiten bestimmt und in eine zeitliche Reihenfolge gebracht werden. Es wird die zeitliche Struktur parallel verlaufender, unterschiedlich komplexer Arbeitsabläufe als Modell dargestellt. Die verschledenen Arbeitsabläufe sind terminbestimmte, zeit- und/oder materialbeansprechende Tätigkeiten. Anhand relativer Zeitvorgaben einzelner Arbeitsgänge innerhalb der Abläufe wird der spätere Ablauf mit absoluten, jedoch von der Gesamtsituation abhängigen Terminen festgelegt.

Bei der beispielsweise in der Netzplantechnik durchgeführte Vorausplanung von Arbeitsabläufen können nicht voraussehbare Schwierigkeiten oder Ereignisse die Planung unbrauchbar machen, so daß eine neue Planung für den weiteren Arbeitsablauf durchgeführt werden muß. Dies ist umständlich und zeitraubend und verursacht durch den Planungszeitbedarf eine zusätzliche Verzögerung der Gesamtablaufdauer.

So wird in "Konferenz-Einzelbericht Walzen von Flachprodukten, Symp. der Deutschen Gesellschaft für Materialkunde, Bad Nauheim, D, 21.-22. Okt. 1993, (1994) Oberursel, Seite 191 bis 201, ISBN 3-88355-198-S" ein PPS (Produktionsplanung und Steuerung)-System mit seinen Möglichkeiten und Grenzen für ein Walzwerk erläutert. Auf Seite 194 wird ausgeführt: "Als Ideale Lösung ist ein Fertigungssteuerungssystem anzustreben, das - aufbauend auf einer leistungsfähigen Betriebsdatenerfassung - bei jeder Änderung des vorgesehenen Planes eine völlige Neuoptimierung des gesamten Planes, unter Berücksichtigung der gesamten relevanten Umgebung, durchführt. D. h. jede Änderung im Prozeß gegenüber "Soll" hat einen neuen Gesamtplanungslauf zur Folge.

In der Zusammenfassung ist die Forderung an ein optimales PPS-System, daß alle Ereignisse des realen Prozesses in ihrem Einfluß auf den bestehenden Plan überprüft werden und gegebenenfalls eine ganzheitliche Neuplanung durchgeführt wird. Dieser Vorgang müßte durch jedes Ereignis im Prozeß neu angestoßen werden. Ein solches PPS-System kann nur als Zielvorgabe dienen. Reale Systeme sind allein schon aus Performancegründen nicht in der Lage, diesen Forderungen zeitnah gerecht zu werden."

Mit anderen Worten soll theoretisch ein Plan bei Auftreten eines nicht vorausgesehenen Ereignisses geändert und durch einen neuen das Ereignis berücksichtigenden Plan ersetzt werden.

Hier setzt die Erfindung ein der das Problem zugrundeliegt, ein Verfahren zur Disposition über und/oder Aktivierung von Arbeitsabläufen bereitzustellen, mit dem über Ressourcen für die Durchführung der Arbeitsabläufe auf der Basis der jeweils vorhandenen und zu bestimmten Zeiten für die Arbeitsabläufe geeigneten und verfügbaren Ressourcen in Abhängigkeit von Ereignissen so disponiert bzw. die Ressourcen so aktiviert werden, daß aufgrund der Ereignisse auszuführende Arbeitsabläufe in bezug auf wenigstens ein jeweils vorgebbares Kriterium optimal ausgeführt werden können.

Erfindungsgemäß wird vorgeschlagen ein Verfahren zur situationsabhängigen automatischen Disposition über bzw. Aktivierung von Ressourcen für die Erledigung von Aufträgen, wobei eine fortlaufende Optimierungs-Simulation mit einer Reihe von Ressourcen, die zur Ausführung vorgegebener Aufträge vorhanden sind, derart erfolgt, daß
- bei einem zu einem Zeitpunkt auftretenden oder bestehenden Ereignis die für dieses Ereignis relevanten Ressourcen auf ihre Eignung und sofortige oder künftige Verfügbarkeit für prioritätsbezogen auszuführende Aufträge überprüft werden und
- fortlaufend, unter Berücksichtigung der Gesamtsituation und Zugrundelegung von für die Ausführung von Aufträgen notwendigen Kriterien die zu jedem Zeitpunkt für jede Ressource optimale Auftragsreihenfolge zunächst dispositiv ermittelt wird, um anschließend entweder
- eine verfügbare Ressource für den zum Zeitpunkt ihrer Verfügbarkeit bestmöglichen Auftrag auszuwählen, über die Ressource zu disponieren und sie sodann zur Durchführung des Auftrags zu aktivieren oder
- eine bereits aktivierte Ressource unter Zugrundelegung von für die Aufträge zweckmäßigen Kriterien für einen Auftrag höherer Priorität auszuwählen, über die Ressource zu disponieren und sie sodann zur Durchführung des Auftrags zu aktivieren.

Unter Ressource sind hierbei technische Anlagen und Einrichtungen aber auch organisatorische Einheiten, in denen zur Ausführung der Arbeiten Menschen benötigt werden, zu verstehen. Mit dem vorstehend beschriebenen Verfahren können Aufträge für Arbeiten situationsabhängig optimal disponiert und durchgeführt werden, da die Ressourcen optimal zugeordnet und aktiviert werden. Es ergibt sich dabei eine bei Verfügbarkeit der Ressourcen günstige Zuordnung und Reihenfolge der Abarbeitung der auszuführenden Arbeiten. Durch das Verfahren werden keine Arbeitsabläufe nach einem festen Schema unter Zuordnung zu entsprechenden Ressourcen vorausgeplant. Die Disposition der Ressourcen geschieht ereignisgesteuert. Damit wird der jeweiligen Ist-Situation der Ressourcen im Hinblick auf auszuführende Arbeiten Rechnung getragen. Diese Ist-Situation bedeutet, daß bei der Erkennung des jeweiligen Ereignisses die Verfügbarkeit der Ressourcen berücksichtigt wird, d.h. es wird festgestellt, welche Ressourcen bestimmte Arbeitsabläufe ausführen und wann diese voraussichtlich beendet sind, sowie welche Ressourcen für die Arbeiten frei sind. Anhand dieser Informationen und der Eignung der Ressourcen für die Ausführung der Arbeiten wird dann über die Disposition entschieden.

Erfindungsgemäß wird für eine frei verfügbare Ressource der für diese optimale Arbeitsablauf ausgewählt. Ferner kann bei nicht verfügbaren Ressourcen, jedoch zwingend zu erledigendem Arbeitsablauf zumindest iene der Ressourcen nach zumindest einem zweckmäßigen Kriterium aus einem Arbeitsablauf herausgelöst und zur Erledigung des eine wichtigere Priorität aufweisenden Arbeitsablaufs aktiviert werden.

Insbesondere wird das jeweilige Ereignis nach einem vorgegebenen Zeitplan aus gespeicherten Daten oder zu einem durch Grenzwertüberschreitung bestimmten Zeitpunkt selbsttätig oder manuell ausgelöst. Das Ereignis kann zum Beispiel in periodischen Zeitabständen oder zu bestimmten Kalendertagen automatisch anhand von gespeicherten Daten generiert werden. Darüber hinaus wird das jeweilige Ereignis bedarfsweise manuell, d.h. über eine Betätigung von Auslöseorganen ausgelöst. Auch das Erreichen bestimmter Grenzwerte, zum Beispiel Zählerstände, Priorität eines durchzuführenden Auftrages usw., kann das Ereignis automatisch auslösen.

Vorzugsweise werden Ereignisse aus Daten, die von technischen Einrichtungen selbsttätig oder durch manuelle Betätigung von Eingabeelementen erzeugt werden, gebildet. Beispielsweise können Ereignisse von kommunikationsfähigen Schnittstellen durch entsprechende Daten oder durch Betätigung von Tastaturen bzw. durch von Speichern per Programm ausgelesene Daten ausgelöst werden.

Insbesondere kann ein Ereignis auch eine Rückmeldung einer frei gewordenen oder zu einem Zeitpunkt zur Verfügung stehenden Ressource sein.

Bei einer bevorzugten Ausführungsform werden nach dem Auftreten eines Ereignisses gespeicherte Stammdaten der Ressourcen auf ihre Relevanz für das Ereignis geprüft und bei positivem Prüfergebnis mit ereignisbezogenen Daten für die Dispositionsentscheidung verfügbar gemacht. Insbesondere werden die ereignisbezogenen und dispositions-relevanen Daten klassifiziert und in eine Klassenbibliothek für Aufträge eingeordnet. Die oben beschriebenen Verfahrensschritte können als Normierung und Klassifizierung von Ereignissen bezeichnet werden. Normierte und klassifizierte Ereignisse werden bei Vorliegen bestimmter Kriterien in Aufträge für Arbeitsabläufe umgesetzt, die in eine dispositive Planung übernommen werden. Die dispositive Planung arbeitet mit in einem vorgebbaren Zeitraum auszuführenden Aufträgen und ermittelt nach dem oben erwähnten Kriterium bzw. den Kriterien die durch formale Vorgaben bestimmten Ausführungszeiträume. Insbesondere werden die klassifizierten Aufträge auf Prioritäten hin überprüft. Die so aufbereiteten Aufträge werden in der Simulation mit den für die Ausführung geeigneten, in Wertigkeiten für bestimmte Arbeiten eingeteilten Ressourcen in Zusammenhang gebracht, wobei Kriterien wie die Verfügbarkeit der Ressourcen für den Beginn der jeweiligen Arbeit berücksichtigt werden.

Es ist zweckmäßig, wenn die Ressourcen dann, wenn sie für die Ausführung von Arbeitsabläufen frei und für diese bestimmt und eingerichtet sind, eine entsprechende Meldung erzeugen, die Grundlage für eine automatische Dispositionsentscheidung ist, mit der eine ausgewählte Ressource durch Übergabe der für die Durchführung des jeweiligen Arbeitsablaufs notwendigen Daten aktiviert wird.

Bei einer bevorzugten Ausführung erzeugen die Ressourcen entsprechende Meldungen wenn:
a) Betriebs-/Einsatzbereitschaft vorliegt,
b) ein Auftrag beendet worden ist,
c) eine Unterbrechungsinformation bei einem Arbeitsablauf erhalten wurde,
d) eine außerplanmäßige Unterbrechung eines Auftrages erfolgt,
e) die Verfügbarkeit endet.

Wenn eine entsprechende Meldung von den Ressourcen empfangen wird, wird diese gespeichert und löst einen erneuten Dispositionsvorgang aus, durch den in Abhängigkeit der im jeweiligen Zeitraum durchzuführenden Arbeitsabläufen der Ressource Daten für einen weiteren Auftrag übergeben werden, wenn ein solcher Auftrag in der Bibliothek vorhanden ist.

Es ist zweckmäßig, wenn Aufträge auch durch manuelle Eingabe von Daten durch Vorgabe von Ausführungsterminen unter Zuordnung von Ressourcen disponiert werden können.

Es ist aber auch vorteilhaft, wenn die Dispositionsentscheidung für Aufträge an Ressourcen durch Wegnahme von für die Aktivierung der Ressourcen notwendigen Bedingungsdaten ausgesetzt werden kann. Es besteht also die Möglichkeit, wenn organisatorische oder technische Gründe dies erfordern, die Bearbeitung von Aufträgen vorläufig auszusetzen, ohne diese endgültig zu stornieren.

Bei einer günstigen Ausführungsform sind Aufträgen für Ressourcen eine Reihe von wählbaren Freigabekennzeichen zugeordnet, die auf ihr Vorhandensein vor Auftragsweiterleitung an die Ressource geprüft werden, wobei im Falle eines oder mehrerer fehlender Freigabekriterien eine bedingte Freigabe für einen vorgebbaren Zeitraum erfolgt, innerhalb dem, bei Wegfall des oder der fehlenden Kriterien, eine Dispositionsentscheidung für den jeweiligen Auftrag nicht verhindert wird.

Bei einer weiteren zweckmäßigen Ausführungsform sind Aufträge für Ressourcen durch Eingabe entsprechender Daten und deren Verarbeitung durch die Simulation stornierbar. Es werden dann die Aufträge nicht weiterverfolgt. Dabei ist es vorteilhaft, wenn die Aufträge mit dem Kennzeichen der Stornierung gespeichert werden. Wenn den Ressourcen bereits die Aufträge zur Ausführung übergeben worden sind, aber die Ausführung noch nicht begonnen wurde, werden die Anweisungen zur Stornierung an die Ressourcen übermittelt. Danach wird die Disposition gelöscht.

Ressourcen können für die Ausführung bestimmter Arbeitsabläufe verschieden geeignet sein. Deshalb sind die Ressourcen in bezug auf die Arbeitsabläufe in Wertigkeiten oder Klassen eingeteilt. Hierbei ist es sinnvoll, der jeweiligen Ressource eine Hauptwertigkeit oder -klasse, wenn diese Ressource für eine bestimmte Tätigkeit eingerichtet und bestimmt oder besonders geeignet ist, und Nebenwertigkeiten oder -klassen zuzuordnen, wenn die Ressource auch noch andere Tätigkeiten ausüben kann. Zu jeder Ressource gehört somit ein Profil, das angibt. für welche Tätigkeiten bzw. Arbeitsabläufe eine Ressource einsetzbar ist. Das Ressourcenprofil wird bei der Disposition über die Ressource ausgewertet, indem zuerst die Hauptwertigkeit bzw. -klasse und danach die Nebenwertigkeiten bzw. -klassen berücksichtigt werden. Insbesondere sind die Ressourcen so eingerichtet, daß sie zu einer bestimmten Zeit jeweils nur einen bestimmten Arbeitsablauf ausführen. der mehrere Verfahrensschritte umfassen kann. Damit ergibt sich der Vorteil, daß die Ressource nach Durchführung des jeweiligen Auftrags für weitere Aufträge verfügbar ist.

Ressourcen können stationär oder mobil sein, wobei Vorkehrungen getroffen sein müssen, daß die Ressourcen für die Datenübertragung erreichbar sind. Die Auftragsdaten werden vorzugsweise automatisch archiviert. Es ist weiterhin günstig, wenn Aufträge wenigstens ein Kriterium für die Unterbrechung oder das Abbrechen aufweisen. Unter Berücksichtigung der Priorität anderer Aufträge können daher auch Aufträge unterbrochen oder abgebrochen und zu einem späteren Zeitpunkt wieder aufgenommen werden.

Zum Zwecke der selbsttätigen Disposition sind auszuführende Aufträge durch einen oder mehrere Arbeitsgänge, die zeitlich hintereinander oder zueinander versetzt ablaufen können. mit Angaben zu den für die Ausführung erforderlichen Profilen von Maschinen- oder Tätigkeitsmerkmalen und deren voraussichtliche Ausführungsdauer festgelegt.

Eine weitere zweckmäßige Ausführungsform besteht in der Berücksichtigung unterschiedlicher Strategien zur Sicherstellung von Material- bzw. Ersatzteilverfügbarkeiten hinsichtlich deren Beschaffungszeiten und kostenoptimierter Bevorratung.

Eine vorteilhafte Ausführungsform besteht darin, daß bei der Disposition bereits die strategischen Unternehmensziele mit unterschiedlicher Wichtung berücksichtigt werden können. Insbesondere ist es vorteilhaft, wenn sich die Dispositionsstrategie an die Unternehmensziele anpassen läßt und die vorzugsweisen Kriterien
a) Kostenoptimierung
b) Terminoptimierung
c) Ressourcenauslastung
d) Qualität
prozentual unterschiedlich gewichtet werden können.

Das erfindungsgemäße Verfahren zur Bildung optimaler Auftragsreihenfolgen und situationsabhängiger Disposition von Ressourcen für die Erledigung von Arbeitsabläufen kann auch derart charakterisiert werden, daß das Verfahren insbesondere vollautomatisch aus einem sich stochastisch verändernden, in Art und Umfang nicht begrenzten Wertevorrat von auszuführenden Aufträgen (Aufgaben, Arbeiten, Tätigkeiten), die in Form von Stammdaten klassifiziert sind und beim Eintreten von auslösenden Ereignissen mittels spezifischer Stammdaten des Auftraggebers (Einsatzort, Einsatzart, Startprioritäten, garantierten Reaktionszeiten, vertragliche Abrechnungsart) qualifiziert und normiert, anschließend das Maß der Dringlichkeit aus den Differenzen zwischen den frühest- und spätestmöglichen Startzeitpunkten ermittelt und für jeden auszuführenden Auftrag kontinuierlich eine entscheidungsrelevante Gesamtpriorität bildet und diese zusammen mit weiteren, aus einem frei wählbaren Wertevorrat strategischcr Unternehmensdaten (Kostenminimierung, Materialverfügbarkeit, Qualität, Termineinhaltung, Ressourcenauslastung, etc.) ausgewählten Entscheidungskriterien und den zur Ausführung benötigten und in den Unternehmungsstammdaten gespeicherten Ressourcen (Material, Werkzeuge, Arbeitskräfte) unter Berücksichtigung deren erforderlichen und frei definierbaren Profile in einer mehrkriterialen fortlaufenden Simulation mit dem zur Erledigung bereitgestellten Potential an Ressourcen, das in seiner Anzahl und Kapazität sowie den Profilen und deren Ausprägungen ebenfalls frei definierbar ist, kontinuierlich gegeneinander abgleicht und für jeden momentanen und zukünftigen Zeitpunkt die optimale Reihenfolge der zeitlichen Ausführung und Zuordnung von Aufträgen zu Ressourcen dispositiv ermittelt, jedoch erst bei Verfügbarkeit von Ressourcen unter Berücksichtigung der Gesamtsituation die zu diesem Zeitpunkt optimalste Dispositionsentscheidung unverzüglich trifft und die getroffene Entscheidung nebst den zur Ausführung relevanten Informationen den beteiligten Ressourcen bekanntmacht und die Ausführung der Aufträge damit einleitet.

Weitere Einzelheiten, Merkmale und Vorteile der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: ein Ablaufschema von Verfahrensschritten für die Disposition und/oder Aktivierung von Ressourcen und
- Fig. 2: ein Diagramm über die Disposition von Aufträgen, deren Dringlichkeit in Ordinatenrichtung und der zeitliche Beginn in Abszissenrichtung dargestellt ist.

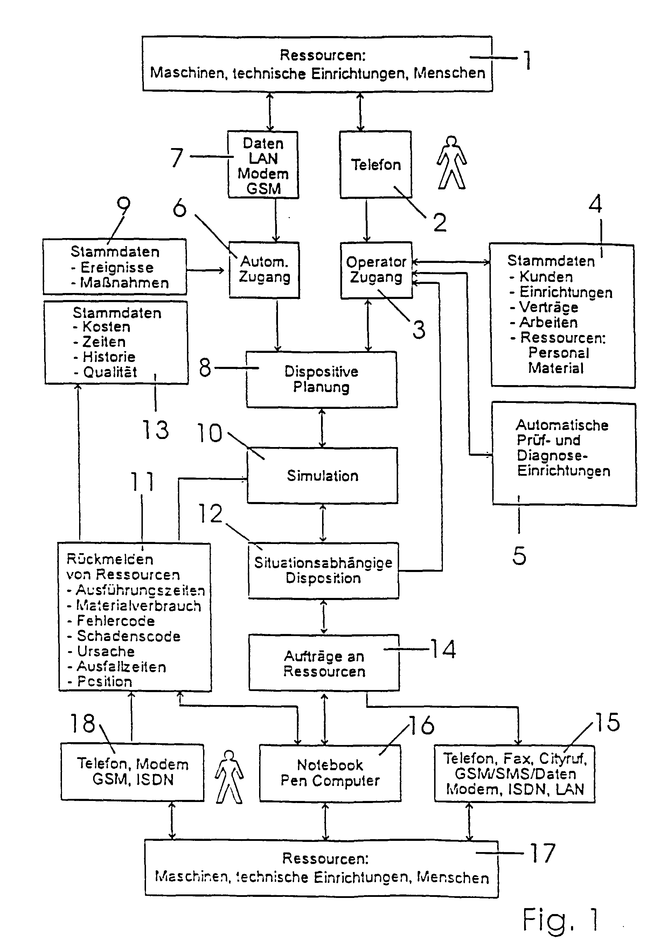

Das Verfahren, dessen Ablaufschema in Fig. 1 dargestellt ist, betrifft eine situationsabhängige Disposition und Betätigung von Arbeitsabläufen, zu denen auch Geschäfts- und Informationsprozesse gehören. beispielsweise in Verbindung mit Service- und Außendienstorganisationen. Die Arbeitsabläufe werden von Ressourcen ausgeführt. Ressourcen sind Maschinen, technische Anlagen und Einrichtungen. aber auch Menschen. Das erfindungsgemäße Verfahren benutzt Arbeits- und Dienstleistungsprozesse ohne diese als solche zu ändern. Beeinflußt wird die Zuordnung und die Aktivierung der Ressourcen, die diese Prozesse ausführen.

Ein Kern der Erfindung ist das Informations-Management in bezug auf die Ressourcen. In Fig. 1sind die von den Ressourcen auszuführenden Arbeitsabläufe schematisch dargestellt und mit 1 bezeichnet. Von den Ressourcen werden Informationen zu einer Stelle mit einer Datenverarbeitungsanlage übertragen, die die Dispositions- und Managementarbeitsgänge ausführt. Als Übertragungsmittel ist in Fig. 1 beispielhaft ein Telefon erwähnt. Der Übertragungsschritt zur Übermittlung von Daten ist in Fig. 1 mit 2 bezeichnet. Durch die Übermittlung von Informationen über die Arbeitsabläufe der Ressourcen, zu deren Arbeitsabläufen auch der Bereitschafts-, Ruhe-, Reparaturzustand usw. gehören, erhält ein Operator Daten, der zum Beispiel die Aufsicht über das Dispositions- und Management-System führt bzw. dieses überwacht und beeinflußt. Der Vorgang der Beaufsichtigung und der Beeinflussung ist in Fig. 1 mit 3 bezeichnet.

Stammdaten über die Arbeitsabläufe und dazugehörige Informationen sind gespeichert und werden, falls erforderlich, vom Operator aktualisiert. Der Vorgang des Auslesens oder der Eingabe von Stammdaten ist in Fig. 1 mit 4 bezeichnet. Die Stammdaten beziehen sich insbesondere auf Kunden, vorhandene Einrichtungen, Verträge, Arbeitsabläufe und Ressourcen wie Maschinen, Anlagen, Personal und Material. Weiterhin stehen dem Operator gespeicherte Informationen über automatische Prüf- und Diagnoseeinrichtungen zur Verfügung. Das Auslesen und die Eingabe entsprechender Informationen ist in Fig. 1 mit 5 bezeichnet.

Der Operator löst durch manuelle Eingabe entsprechender Daten in der Datenverarbeitungseinrichtung das Verfahren zur situationsabhängigen Disposition und Beeinflussung von Arbeitsabläufen aus. Dieses Verfahren ist ereignisgesteuert, d.h. nur das Vorhandensein von Ereignissen wie die manuelle Eingabe entsprechender Daten löst entsprechende Dispositions- und/oder Aktivierungsmaßnahmen aus.

Die Ereignisse können automatisch erfaßt oder manuell identifiziert werden. Die automatische Erfassung ist in Fig. 1 mit 6 bezeichnet und geschieht durch Daten aus technischen Einrichtungen über kommunikationsfähige Schnittstellen, beispielsweise speicherprogrammierbare Steuerungen, Fernwirkeinheiten etc.. Diese Datenübertragung ist in Fig. 1 durch den Schritt 7 angedeutet. Die manuelle Identifikation ist zum Beispiel Eingabe über Bildschirm, beispielsweise beim telefonischen Dialog, Erfassung einer schriftlichen Nachricht/Fax etc.

Die Ereignisse lösen einen in Fig. 1 mit 8 bezeichneten Verfahrensschritt aus, der die dispositive Planung umfaßt. Der Schritt 6, d.h. der automatische Zugang zum Schritt 8 kann durch sogenannte interne Ereignisse ausgelöst werden. Interne Ereignisse können fest vorgegeben sein. In Fig. 1 ist dies durch die Aktivierung von Stammdaten in einem Schritt 9 bezeichnet. Die Stammdaten beziehen sich auf Ereignisse, die zyklisch, beispielsweise jeden 1. im Monat um 13.00 Uhr; einmalig, beispielsweise am 24.12.1998 um 18.00 Uhr; zählerabhängig, beispielsweise nach 500 Stunden, hervorgerufen werden.

Externe Ereignisse. die automatisch, d.h. über den Schritt 6 eine Aktivierung des Systems bewirken, sind Zählerstände, beispielsweise Betriebsstunden, Stückzahl etc., digitale Zustände. beispielsweise Störungen, Meldungen etc. oder die manuell in Schritt 3 bewirkten Ereignisse. Die Ereignisse werden im Schritt 3 nach dem Erfassen bzw. Identifizieren automatisch normiert.

Die Normierung ergänzt die Ereignisse durch Hinzufügen weiterer, dispositionsrelevanter Informationen aus dem Speicher der Stammdaten. Diese geben Auskunft über
- Art der Tätigkeit oder technische Einrichtungen;
- Auftragsart, beispielsweise Beratung, Inspektion, Wartung, Reparatur, Auslieferung, Montage etc.;
- Einsatz-/Aufstellungsorte;
- Abrechnungsart, beispielsweise Wartungsvertrag, Festpreis, Pauschale, Zeit und Aufwand. Gewährleistung, Garantie, Kulanz, Sonderpreis, Reisekosten etc.;
- auszuführende Tätigkeiten/Arbeiten, Arbeitsgänge und deren voraussichtliche Dauer etc.;
- vertraglich garantierte Termine und Zeiten (frühester/spätester Antrittstermin, Fertigstellungstermin, Garantie- und Gewährleistungszeiten) etc.;
- benötigte Ersatzteile, Werkzeuge, Dokumentationen, Prüfung der Verfügbarkeit etc.:
- An- und Abfahrtszeiten. einmalige Rüstzeiten etc.;
- zur Ausführung notwendige Ressourcenklassen (primäre und sekundäre);
- weitere Kriterien wie Anfangsprioritäten, Sonderprioritäten, Unterbrechbarkeit, namentliche Ressourcenzuordnung etc.;
- Zusatzinformationen, beispielsweise Ersatzbeschaffung steht an, Wettbewerbssituation, Zufriedenheitsgrad;
- Historie mit Angabe von Leistungen/Arbeiten, evtl. Ursachen und Erscheingungsbildern (Schadensursache und Schadensbild), ausgeführte Maßnahmen und Hinweise auf mögliche weitere Probleme;
- Kennzahlen über den allgemeinen Qualitätsstandard dieser Tätigkeit oder technische Einrichtungen und die aktuellen Vergleichszahlen der diesem Auftrag zugrundeliegenden Tätigkeit oder technischen Einrichtung. Daraus sind beispielsweise Rückschlüsse auf die generelle Eignung dieser Einrichtungen für den speziellen Einsatz möglich;
- temporäre Sonderkennzeichen für Kunden, Tätigkeiten/technische Einrichtungen, Verträge, Materialien, Ressourcen zur Unterstützung bei Sonderaktionen wie Serienfehler, zusätzliche Überprüfungen etc.;
- Freigabekennzeichen der Finanzbuchhaltung;
- Freigabekennzeichen für die automatische Disposition.

Nach der Normierung werden die Ereignisse nach Kriterien klassifiziert und in eine Klassenbibliothek vom Typ Auftrag eingeordnet.

Normierte und klassifizierte Ereignisse können, wenn alle dazu notwendigen kriterialen Freigabekennzeichen vorliegen, die Aufträge automatisch auslösen. Einige Freigabekennzeichen sind oben beispielhaft erwähnt.

Ausgelöste Aufträge werden automatisch ebenfalls im Schritt 8 in die dispositive Planung übernommen.

Die dispositive Planung orientiert sich ausschließlich an den formalen Kriterien der Aufträge und repräsentiert den Wertevorrat der Arbeiten, die innerhalb eines gewählten Betrachtungszeitraumes ausgeführt werden müssen.

Die in der dispositiven Planung ermittelten Aufträge werden in dem in Fig. 1 mit 10 bezeichneten Schritt einer mehrkriterialen Simulation unterworfen, die ständig die für den jeweiligen Augenblick günstigste Disposition unter Berücksichtigung bestimmter, unten noch näher erläuterter Kriterien ermittelt, ohne diese Disposition tatsächlich festzulegen.

Die fortlaufende Simulation ermittelt innerhalb eines wählbaren Zeitfensters unter Berücksichtigung der ausgewählten Kriterien für jeden Auftrag ständig dessen aktuelle Priorität und dynamische Veränderung.

Das Zeitfenster und die Häufigkeit der Simulationsvorgänge pro Zeiteinheit sind frei wählbar und bestimmen sich im wesentlichen aus der Anwendung für Arbeitsabläufe bestimmter Art.

Aus dem klassifizierten Auftrag und der aktuellen Priorität ermittelt die Simulation für alle zur Ausführung einsetzbaren Ressourcenklassen und unter Berücksichtigung von formalen Kriterien, zu welchem Zeitpunkt mit der Bearbeitung begonnen werden müßte.

Es existiert somit ständig ein Modell für die Disposition. Die Aufträge floaten innerhalb der formalen Ausführungszelträume bis zur Dispositionsentscheidung im Modell. Dadurch ist sehr früh erkennbar, ab welchem Zeitpunkt ein Auftrag hinsichtlich seiner formalen Kriterien kritisch wird. Bevor dieser Zeitpunkt eintritt, kann die Simulation andere Aufträge mit Unterbrechungskriterien nach geeigneten Ressourcenklassen untersuchen und mögliche Alternativen zur Abhilfe vorschlagen.

Die Simulation kann die automatische Benachrichtigung dieser Ressourcen anstoßen, Vorbereitung für deren Umdisposition treffen, Nachrichten über die bevorstehenden Maßnahmen nach außen geben und wenn notwendig auch umdisponieren.

Eine automatische Dispositionsentscheidung wird erst dann getroffen, wenn sich eine Ressource als verfügbar meldet.

Eine Ressource muß sich in folgenden Fällen melden:
1. bei Beginn der Verfügbarkeit (Arbeitsbeginn);
2. bei Wiederverfügbarkeit nach abgeschlossenem Auftrag;
3. bei Zugang eines Unterbrechungskennzeichens;
4. zur außerplanmäßigen Unterbrechung eines Auftrages;
5. bei Ende der Verfügbarkeit (Arbeitsende).

Die Rückmeldung geschieht in einem in Fig. 1 mit 11 bezeichneten Schritt und bezieht sich auf Daten über Ausführungszeiten, Materialverbrauch, Fehler, Schäden, Ausfallzeiten und Ort der Ressource, wobei Fehler und Schäden codiert gemeldet werden. Im Schritt 10 werden diese Daten berücksichtigt, indem ein nachfolgender Schritt 12 ausgeführt wird, der mit "situationsabhängiger Disposition" bezeichnet ist. Diese wird beispielsweise auf Abruf dem Operator gemeldet. Die Rückmeldedaten des Schritts 11 gelangen im übrigen zu den Stammdaten und zur Simulation, was in Fig. 1 durch den Schritt 13 bezeichnet ist.

Die Auftragsdaten werden automatisch in einem nachfolgenden Schritt 14 an die Ressourcen übermittelt.

Die Übertragung der Auftragsdaten kann sofort über Telefon, Fax, Cityruf, Modem, ISDN, LAN usw. oder durch transportable Datenträger erfolgen. Erstere Übertragung ist in Fig. 1 mit 15 bezeichnet. Die Auftragsempfänger, d.h. die Ressourcen sind mit 17 bezeichnet. Von diesen werden durch mit 18 bezeichnete Übertragungsverfahren mittels Telefon, Modem usw. die Daten für den Rückmeldeschritt weitergeleitet.

Melden sich Ressourcen, wird deren Status und eventuelle Rückmeldedaten aus dem aktuellen Auftrag übermittelt. Daraus ermittelt die Simulation sofort das neue Modell und übergibt die Daten für den nächsten Auftrag an die Ressource.

Ressourcen und Termine können auch im Rahmen des Schrittes 12 manuell disponiert werden, d.h. die Aufträge können innerhalb der Simulation mit Vorgabe der Ausführungstermine und wahlweise namentlicher Zuordnung von Ressourcen aus den zuständigen Klassen, die unten näher erläutert sind, manuell disponiert werden.

Dies erfolgt beispielsweise bei genauen Terminabsprachen mit dem Leistungsempfänger oder wenn aus besonderen Gründen die namentliche Zuordnung von Ressourcen erforderlich wird.

Die Dispositionsentscheidung für Aufträge kann während der Simulation im Schritt 10 durch die Wegnahme kriterialer Freigabekennzeichen ausgesetzt werden. Dazu wird direkt in den Schritt 10 eingegriffen.

Aus organisatorischen oder technischen Gründen kann es erforderlich sein. die Bearbeitung von Aufträgen innerhalb der Simulation vorläufig auszusetzen, ohne diese jedoch endgültig zu stornieren. Dies kann durch die Wegnahme kriterialer Freigabekennzeichen erfolgen.

Aufträge mit unvollständigen kriterialen Freigabekennzeichen erhalten eine bedingte Freigabe zur Simulation unter dem Vorbehalt der Rechtzeitigkeit.

Für einen vorwählbaren Zeitraum werden diese Aufträge im Schritt 12 so behandelt, als seien alle kriterialen Freigabekennzeichen vorhanden. Treten die fehlenden Freigabekennzeichen während der Vorbehaltszeit planmäßig ein, werden diese Aufträge entsprechend der sonstigen Kriterien disponiert.

Verzögert sich das Eintreten der fehlenden Freigabekennzeichen über den Vorbehaltszeitraum hinaus. werden diese Aufträge aus der Simulation herausgenommen und für einen wählbaren Zeitraum zur manuellen Bearbeitung in einer Wiedervorlage zwischengespeichert. Nach Ablauf des Zeitraumes werden diese Aufträge automatisch mit einem Kennzeichen gespeichert und aus der Wiedervorlage gelöscht.

Aufträge können aber auch jederzeit manuell durch einen Eingriff in den Schritt 10 storniert werden.

In diesem Fall werden die Aufträge aus der Simulation herausgenommen und alle Auftragsdaten mit den Kennzeichen der Stornierung gespeichert.

Für Aufträge, deren Daten den Ressourcen bereits zur Ausführung vorliegen, werden die Stornokennzeichen an die Ressourcen übermittelt. Danach erst erfolgt das Löschen der Disposition und Entlastung der Ressourcen.

Die Ressourcen sind in Klassen mit bestimmten Wertigkeiten eingeteilt. Art und Anzahl der Ressourcenklassen sind anwendungsspezifisch festzulegen. Innerhalb der Ressourcenklassen gibt es Unterklassen. Jede Ressourcenklasse hat nur primäre aber beliebig viele sekundäre Unterklassen.

Die Profile der Ressourcen sind kriterial und eindeutig den Ressourcenklassen zugeordnet. Die Profile beschreiben, für welche Tätigkeiten/Arbeitsgänge die Ressourcen einsetzbar sind. Aus den Profilen ergeben sich die Ressourcenklassen.

### Beispiel:

| | | |
|---|---|---|
| Ressourcenklassen: | Ressourcen | Profile |
| Kraftfahrzeug | Pkw, Typ | Personentransport |

Eine Ressource kann ein primäres Profil besitzen und kann weitere sekundäre Profile haben.

Die primären Profile der Ressourcen beschreiben die Tätigkeiten/Arbeitsgänge, für welche die Ressourcen vorgehalten bzw. entlohnt werden, zum Beispiel Eingruppierung in eine Maschinen-/Kosten-/Tarifgruppe. In den sekundären Profilen sind die Tätigkeiten/Arbeitsgänge beschrieben, für welche die Ressourcen aufgrund konstruktiver Merkmale Ausbildung/Kenntnisse auch einsetzbar sind, die aber in der Regel denen niedrigerer Maschinen-/Kosten-/Tarifgruppen entsprechen.

Das primäre Profil einer Ressource ist nur einer Ressourcenklasse zugeordnet, die sekundären Profile können mehreren Ressourcenklassen zugeordnet sein.

Dadurch entstehen innerhalb einer Ressourcenklasse primäre und sekundäre Unterklassen. Die primären Unterklassen besitzen die Ressourcen mit primären und sekundären Profilen. Während die sekundären Unterklassen ausschließlich durch Ressourcen mit sekundären Profilen besetzt sind.

Die Disposition im Schritt 12 berücksichtigt erst die primären und dann die sekundären Profile.

Die fortlaufende Simulation im Schritt 10 ermittelt für alle Aufträge und geeigneten Ressourcenklassen ein Modell zur Disposition in der Reihenfolge:
1. primäre Unterklassen und primäre Profile
2. primäre Unterklassen und sekundäre Profile
3. sekundäre Unterklassen und sekundäre Profile

Jede Ressource bearbeitet zu jeder Zeit nur maximal einen Auftrag.

Damit ist sichergestellt, daß jede Ressource nach Abarbeitung des aktuellen Auftrages diesen zeitnah zurückmelden muß und für eine neue, situationsabhänigige Disposition zur Verfügung steht.

Bis zur Dispositionsentscheidung stehen prizipiell alle verfügbaren Ressourcen mit geeigneten Profilen für die Ausführung eines Auftrages zur Verfügung. Von welchen Ressourcen ein Auftrag tatsächlich ausgeführt wird, entscheidet sich erst zum Zeitpunkt der Dispositionsentscheidung, nämlich genau dann, wenn eine Ressource sich als verfügbar meldet.

Ressourcen können stationär z.B. Maschinen, oder mobil, z.B. Fahrzeuge sein. Über geeignete Nachrichtenübertragungsmittel läßt sich erreichen, daß die Ressourcen von der Stelle aus, die die Disposionen durchführt, ständig erreichbar sind.

Die Nutzbarkeit bestimmter Leistungsmerkmale des erfindungsgemäßen Verfahrens bestimmt sich aus dem Erfüllungsgrad dieser Forderung. Für das Stornieren von Aufträgen, die bereits den Ressourcen übermittelt wurden oder das Setzen von Unterbrechungskennzeichen ist die ständige Erreichbarkeit Voraussetzung.

Für alle anderen Funktionen ist es ausreichend, wenn die Erreichbarkeit der Ressource sich auf die Zeiträume beschränkt, in denen neue Auftrags- oder Rückmeldedaten übermittelt werden müssen.

Die Daten aller Aufträge werden zur späteren Weiterverarbeitung und Auswertung in unterschiedlichen Datenspeichern archiviert.

Art und Umfang der Archive richtet sich nach den Ressourcen, den Arbeitsabläufen und Anforderungen von Anwendern.

Formale Bestätigungen für Aufträge, Lieferscheine und Rechnungen können automatisch erzeugt werden.

Das Verfahren generiert aus den formalen Vorgaben und den normierten Aufträgen gewünschte Auftragsbestätigungen per Fax oder e-mail, erstellt Lieferschein- und Rechnungsdatensätze.

Um das Verfahren selbstoptimierend auszubilden, werden folgende Maßnahmen getroffen:

Es werden ständig die zurückgemeldeten Auftragsdaten mit den Vorgaben verglichen und daraus Korrekturfaktoren ermittelt. Die ermittelten Korrekturfaktoren werden nach außen als Empfehlung abgegeben und in tendenzieller Entwicklung dargestellt.

Das Verfahren kann so gesteuert werden, daß die Korrekturfaktoren automatisch in die Simulation einfließen und das Modell für die Dispositionsentscheidung beeinflussen.

Eine automatische Veränderung der Stammdaten erfolgt nicht. Mit diesem Leistungsmerkmal können die Vorgaben aus den Stammdaten den realen Gegebenheiten angepaßt werden.

Aufträge können mehrere Unterbrechnungskriterien besitzen.

Die Bearbeitung von Aufträgen kann mit unterschiedlichen Kriterien unterbrochen bzw. auch abgebrochen werden. Dabei stellen sich folgende Auswirkungen ein:

| Nr | Unterbrechungskriterium | Auswirkungen |
|---|---|---|
| 1 | hochpriorer Ressourcenbedarf | Anforderungen an alle Ressourcen mit geeigneten Profilen und unterbrechbaren Aufträgen |
| 2 | fehlendes Freigabekennzeichen nach Ablauf der bedingten Freigabe | Auftrag wird aus der Simulation gelöscht |
| 3 | manuelles Stornieren | Auftrag wird aus Simulation/Disposition gelöscht und das Stornokennzeichen an die ausführende Ressource übermittelt |
| 4 | Wegnahme Freigabekennzeichen während der Simulation | Dispositionsentscheidung wird bis zur endgültigen Freigabe oder Stornierung ausgesetzt |
| 5 | außerplanmäßig durch die Ressource selbst | Benachrichtigung an den Operator, weitere Entscheidung manuell |

Hochpriore Aufträge können solche mit niedrigerer Priorität und mindestens einem Unterbrechungskriterium bei Bedarf automatisch umdisponieren.

Zeichnet sich ab, daß hochpriore Aufträge hinsichtlich formaler Kriterien drohen kritisch zu werden, schlägt die Simulation geeignete Gegenmaßnahmen vor und leitet gegebenenfalls diese ein. Die Gegenmaßnahmen bestehen darin, daß zunächst in Aufträgen mit niedriger Priorität und dem Unterbrechungskriterium für "hochprioren Ressourcenbedarf" nach geeigneten Ressourcen untersucht werden. Sind dort solche Ressourcen vorhanden, gibt es die Möglichkeit, diese als Maßnahmen zur Abhilfe vorzuschlagen.

Es ist aber auch möglich, daß die Simulation selbst das Umdisponieren einleitet, indem es zunächst die gefundenen Ressourcen von dem hochprioren Bedarf informiert und diese dazu veranlaßt, sich als verfügbar zu melden.

Sobald sich darauf eine Ressource als verfügbar meldet, übermittelt die Simulation die Auftragsdaten und ändert die Disposition entsprechend. Der so unterbrochene Auftrag kann zu einem späteren Zeitpunkt von der gleichen oder aber in besonderen Fällen durch eine andere Ressource weiterbearbeitet werden.

Jeder Auftrag hat mindestens einen Arbeitsgang.

Für die situationsabhängige Simulation ist für jeden Auftrag mindestens ein Arbeitsgang vorhanden. Dieser muß die voraussichtliche Ausführungsdauer und das Profil der ausführenden Ressource beschreiben.

Ein Arbeitsgang kann ein primäres Profil besitzen und kann weitere sekundäre Profile haben.

Die primären Profile der Arbeitsgänge/Tätigkeiten legen fest, welche Ressourcen diese vorzugsweise ausführen sollen. Der Multiplikator für die geplante Zeit ist bei den primären Profilen immer 1 (eins).

Die sekundären Profile der Arbeitsgänge/Tätigkeiten geben an, welche Ressourcen diese aufgrund der Ausbildung/Kenntnisse ausführen können. Der Multiplikator für die geplante Zeit ist bei den sekundären Profilen immer größer 1 (eins).

Die Disposition kann unterschiedliche Material-Strategien je Ersatzteil berücksichtigen.

Sollen zusätzlich Ersatzteil- und Materialverfügbarkeiten berücksichtigt werden, so sind die Materialien in Art und Menge anzugeben. Dabei ist zu beachten, wie die Material-Strategie sein soll. Ist davon auszugehen, daß alle Ersatzteile und Materialien zu jeder Zeit ausreichend und sofort verfügbar sind, kann auf eine Bestandskontrolle verzichtet werden.

Sind unterschiedliche Material-Strategien je Ersatzteil vorgesehen, zum Beispiel lager-optimiert oder auftragsoptimiert, müssen für alle Dispositionszeiten neben der Bestandskontrolle die eventuellen notwendigen Vorlaufzeiten für die Beschaffung berücksichtigt werden.

Optimierungskriterien können mit unterschiedlichem Einfluß berücksichtigt werden:

Mit dem erfindungsgemäßen Verfahren lassen sich Ziele wie z.B. Kostenminimierung, Termineinhaltung, Ressourcenauslastung, kürzest mögliche Antrittszeiten, Qualität, etc. mit unterschiedlicher Wichtung berücksichtigen. Abhängig von der gewählten Strategie kann beispielsweise für die Dispositon folgende Wichtung eingestellt werden:

| | | |
|---|---|---|
| 1. | Kostenoptimierung | 60 % |
| 2. | Termineinhaltung | 80 % |
| 3. | Ressourcenauslastung | 30 % |
| 4. | Qualität | 20 % |

Bei der Wichtung treten die Kosten hinter der Termineinhaltung zurück. Die erste Dispositionspriorität liegt auf der Termineinhaltung. Dadurch verlängert die Disposition die Einmalzeit aller Aufträge und disponiert früher.

Bei zwei oder mehr gleichzeitig verfügbaren und geeigneten Ressourcen wird in dem vorliegenden Beispiel die kostengünstigere ausgewählt.

Gibt es für einen Auftrag zwei oder mehr gleichzeitig verfügbare und geeignete Ressourcen, wird die mit der geringeren Gesamtauslastung gewählt.

Damit ist es möglich, die Disposition kontinuierlich der Unternehmensstrategie nachzuführen.

Es kann flexibel auf unterschiedliche Anforderungen und Organisationen angepaßt werden.

Das Verfahren ist an keine bestimmte Organisationsform gebunden und auf beliebige Branchen anpaßbar. Die Ressourcenklasse und Profile sind frei gestaltbar. Arbeitsgänge können ein- oder auch mehrstufig sein. Unteraufträge werden ebenfalls berücksichtigt.

Der Betriebskalender ist auf beliebige Arbeitszeitmodelle anpaßbar und regelt die Ressourcenverfügbarkeit.

Die Übermittlung von Auftrags- und Rückmeldedaten sowie ständige Erreichbarkeit der Ressourcen erfolgt unter Nutzung der vorhandenen öffentlichen Kommunikationsnetze.

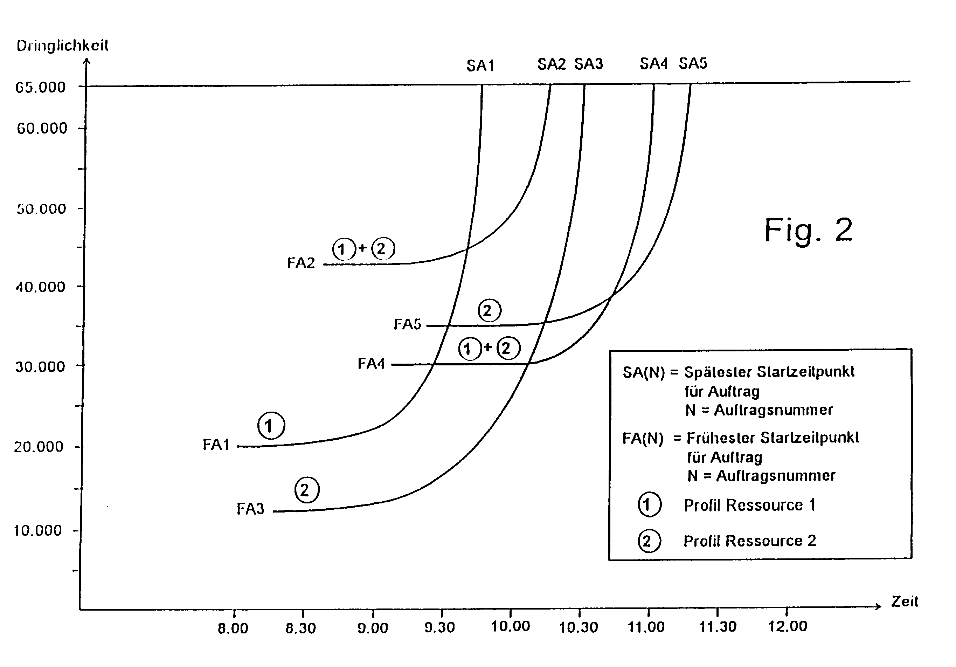

Die Fig. 2 zeigt ein Diagramm für verschiedene durchzuführende Aufträge. In Ordinatenrichtung ist die Dringlichkeit dargestellt.

Die Abszissenachse entspricht der Zeitachse. Es sind für verschiedene mit 1 bis 5 bezeichnete Aufträge jeweils der frühste und späteste Startzeitpunkt in Verbindung mit der jeweiligen Ressource angegeben, die durch Ziffern innerhalb von Kreisen gekennzeichnet sind.

Die vorteilhaften Eigenschaften des erfindungsgemäßen Verfahrens bestehen im wesentlichen darin, daß
- es ausschließlich ereignisgesteuert reagiert;
- auslösende Ereignisse intern und extern verarbeitet;
- die Ereignisse automatisch erfaßt oder manuell identifiziert werden;
- die Ereignisse beim Erfassen oder Identifizieren automatisch normiert werden;
- normierte Ereignisse automatisch Aufträge auslösen können;
- ausgelöste Aufträge automatisch in die dispositive Planung übernommen werden;
- daraus eine fortlaufende. mehrkriteriale Simulation ständig die für den Augenblick optimalste Dispositon ermittelt ohne diese tatsächlich zu treffen;
- eine automatische Dispositionsentscheidung erst dann getroffen wird, wenn sich eine Ressource als verfügbar meldet;
- die Auftragsdaten automatisch an die Ressourcen übermittelt werden;
- Ressourcen und Termine auch manuell disponiert werden können;
- die Dispositionsentscheidung für Aufträge während der Simulation durch die Wegnahme kriterialer Freigabekennzeichen ausgesetzt werden kann;
- für Aufträge mit unvollständigen kriterialen Freigabekennzeichen eine Freigabe zur Simulation unter dem bedingten Vorbehalt der Rechtzeitigkeit erfolgt;
- Aufträge jederzeit storniert werden können;
- die Ressourcen in Klassen eingeteilt sind;
- die Profile der Ressourcen kriterial sind und eindeutig den Ressourcenklassen zugeordnet sein müssen;
- eine Ressource nur ein primäres Profil aber beliebig viele sekundäre Profile besitzen darf;
- jede Ressource mit dem primären Profil einer Ressourcenklasse zugeordnet sein muß und mit den sekundären Profilen weitere Ressourcenklassen zugeordnet sein darf,
- die Disposition erst die primären und dann die sekundären Profile berücksichtigt;
- jede Ressource zu jeder Zeit nur maximal einen Auftrag bearbeitet;
- alle Freiheitsgrade bis zur Disposition erhalten bleiben;
- stationäre und mobile Ressourcen ständig erreichbar sind;
- alle Auftragsdaten automatisch archiviert werden;
- formale Bestätigungen für Aufträge, Lieferscheine und Rechnungen automatisch erzeugt werden;
- es selbstoptimierend ist;
- Aufträge mehrere Unterbrechungskritierien besitzen können;
- hochpriore Aufträge solche mit niedrigerer Priorität und mindestens einem Unterbrechungskriterium bei Bedarf automatisch umdisponieren können;
- jeder Auftrag mindestens einen Arbeitsgang haben muß;
- ein Arbeitsgang genau ein primäres Profil besitzen muß und weitere sekundäre Profile haben kann;
- die Disposition unterschiedliche Material-Strategien je Ersatzteil berücksichtigen kann;
- strategische Unternehmensziele (Kostenminimierung, Termineinhaltung, Ressourcenauslastung, kürzest mögliche Antrittszeiten, Qualität, etc.) mit unterschiedlicher Wichtung berücksichtigt werden;
- es flexibel auf unterschiedliche Anforderungen und Organisationen angepaßt werden kann.

Die zum Zeitpunkt der Dispositionsentscheidung verfügbaren Ressourcen werden unter Berücksichtigung deren Profile nach optimalen Kriterien disponiert.

Die Nachteile einer vor ausplanung, weil
- sich der Wertevorrat und die Bedingungen für die auszuführenden Arbeiten (Art, Dauer, benötigte Ressourcen, frühest-/spätestmöglicher Anfangstermin) ständig mit jedem neu hinzukommenden Auftrag ändern,
- sich die Verfügbarkeit der Ressourcen in nicht voraussehbarer Form (Überschreitung von Planzeiten, Verkehrssituation. technische und menschliche Schwächen, etc.) ändern,
- mögliche Situationsänderungen nicht vorhersehbar sind und die Mittel der Planung daher versagen,
werden mit dem erfindungsgemäßen Verfahren vermieden.

## Patentansprüche

1. Verfahren zur situationsabhängigen automatischen Disposition über bzw. Aktivierung von Ressourcen für die Erledigung von Aufträgen, wobei eine fortlaufende Optimierungs-Simulation aus einer Reihe von Ressourcen, die zur Ausführung vorgegebener Aufträge vorhanden sind, derart erfolgt, daß
- bei einem zu einem Zeitpunkt auftretenden oder bestehenden Ereignis die für dieses Ereignis relevanten Ressourcen auf ihre Eignung und sofortige oder künftige Verfügbarkeit für prioritätsbezogen auszuführende Aufträge überprüft werden und
- fortlaufend, unter Berücksichtigung der Gesamtsituation und Zugrundelegung von für die Ausführung von Aufträgen notwendigen Kriterien die zu jedem Zeitpunkt für jede Ressource optimale Auftragsreihenfolge zunächst dispositiv ermittelt wird, um anschließend entweder
- eine verfügbare Ressource für den zum Zeitpunkt ihrer Verfügbarkeit bestmöglichen Auftrag auszuwählen, über die Ressource zu disponieren und sodann zur Durchführung des Auftrags zu aktivieren oder
- eine bereits aktivierte Ressource unter Zugrundelegung von für die Aufträge zweckmäßigen Kriterien für einen Auftrag höherer Priorität auszuwählen, über die Ressource zu disponieren und sodann zur Durchführung des Auftrags zu aktivieren.

2. Verfahren nach Anspruch 1,
bei dem
das jeweilige Ereignis nach einem vorgebbaren Zeitplan aus gespeicherten Daten oder zu durch Grenzwertüberschreitung bestimmten Zeitpunkten selbsttätig oder manuell ausgelöst wird.

3. Verfahren nach Anspruch 1 oder 2,
bei dem
die Ereignisse aus Daten, die von technischen Einrichtungen selbsttätig oder durch manuelle Betätigung von Eingabeelementen erzeugt werden, gebildet werden.

4. Verfahren nach einem oder mehreren der vorhergehenden Ansprüche,
bei dem
nach dem Auftreten eines Ereignisses aus gespeicherten Stammdaten selbsttätig Ressourcen auf ihre Relevanz für das Ereignis geprüft und bei positivem Prüfergebnis mit ereignisbezogenen Daten für die Dispositionsentscheidung verfügbar gemacht werden.

5. Verfahren nach einem oder mehreren der vorhergehenden Ansprüche,
bei dem
die durch Stammdaten normierten und klassifizierten Ereignisdaten als Aufträge für Arbeitsabläufe einer dispositiven Planung unterworfen werden, die ständig aus den formalen Kriterien der Aufträge diejenigen ermittelt, die innerhalb eines gewählten Betrachtungszeitraums ausgeführt werden müssen.

6. Verfahren nach einem oder mehreren der vorhergehenden Ansprüche,
bei dem
die Ressourcen dann, wenn sie für Aufträge frei sind und für diese bestimmt bzw. eingerichtet sind, eine entsprechende Meldung erzeugen, die von der Optimierungs-Simulation für die Erzeugung der automatischen Dispositionsentscheidung ausgewertet wird.

7. Verfahren nach einem oder mehreren der vorhergehenden Ansprüche,
bei dem
die Ressourcen jeweils eine Meldung bei Beginn der Verfügbarkeit und Ende eines von ihnen durchgeführten Auftrages und bei einer Unterbrechungs-information sowie bei außerplanmäßiger Unterbrechung und beim Wegfall der Verfügbarkeit erzeugen.

8. Verfahren nach einem oder mehreren der vorhergehenden Ansprüche,
bei dem
durch die Optimierungs-Simulation ständig die dynamischen Prioritäten aller dispositiven Aufträge für den gewählten Ausführungszeitraum ermittelt und unter Berücksichtigung der aktuellen Auftrags- und Ressourceneigenschaften zum Zeitpunkt der Verfügbarkeitsmeldung von Ressourcen selbsttätig die Dispositionsentscheidungen getroffen und die ausgewählten Aufträge zur Ausführung an diese weitergeleitet werden.

9. Verfahren nach einem oder mehreren der vorhergehenden Ansprüche,
bei dem
durch manuelle Eingabe von Daten Ausführungstermine unter Zuordnung zu Ressourcen disponiert werden.

10. Verfahren nach einem oder mehreren der vorhergehenden Ansprüche,
bei dem
die Dispositionsentscheidung für die Aktivierung von Ressourcen durch Zurückziehung von für die Aktivierung der Ressourcen notwendigen Bedingungsdaten ausgesetzt werden kann.

11. Verfahren nach einem oder mehreren der vorhergehenden Ansprüche,
bei dem
Aufträgen für Ressourcen eine Reihe von wählbaren Freigabekennzeichen zugeordnet werden, die auf ihr Vorhandensein vor Auftragsweiterleitung an die jeweilige Ressource geprüft werden, und daß im Falle eines oder mehrerer fehlender Freigabekriterien eine bedingte Freigabe für einen vorgebbaren Zeitraum erfolgt, innerhalb dem, bei Wegfall des oder der fehlenden Kriterien, eine Dispositionsentscheidung für den jeweiligen Auftrag nicht verhindert wird.

12. Verfahren nach einem oder mehreren der vorhergehenden Ansprüche,
bei dem
Aufträge für Ressourcen durch Eingabe entsprechender Daten und deren Verarbeitung durch die Optimierungs-Simulation stornierbar sind.

13. Verfahren nach einem oder mehreren der vorhergehenden Ansprüche,
bei dem
die Ressourcen nach ihren Eigenschaften für die Durchführung von Aufträgen in Klassen eingeteilt sind.

14. Verfahren nach Anspruch 13,
bei dem
jede Ressource wenigstens eine Hauptklasse, die sich auf die besondere Eignung für den jeweiligen Auftrag bezieht, und gegebenenfalls Unterklassen hat. die sich auf eine geringere Eignung für einen Auftrag als wenigstens eine andere Ressource bezieht, die der Hauptklasse für diesen Arbeitsablauf zugeordnet ist.

15. Verfahren nach einem oder mehreren der vorhergehenden Ansprüche,
bei dem
die Ressourcen jeweils einen bestimmten Auftrag zu einer bestimmten Zeit ausführen.

16. Verfahren nach einem oder mehreren der vorhergehenden Ansprüche,
bei dem
die Ressourcen stationär oder mobil sein können.

17. Verfahren nach einem oder mehreren der vorhergehenden Ansprüche,
bei dem
als Kriterien für die Optimierung Kosten und/oder Termineinhaltung und/ oder Auslastung und/oder Qualität des Auftrags ausgewählt werden.

18. Verfahren nach einem oder mehreren der vorhergehenden Ansprüche,
bei dem
Daten eines ausgeführten Auftrages mit vorgegebenen Daten eines Auftrages vor dessen Ausführung verglichen werden und daß aus Abweichungen Korrekturfaktoren zur Optimierung zukünftiger Aufträge ermittelt werden.

19. Verfahren nach einem oder mehreren der vorhergehenden Ansprüche,
bei dem
Aufträge ein oder mehrere Unterbrechungskriterien aufweisen, die bei der Zuteilung von Prioritäten berücksichtigt werden.

20. Verfahren nach einem oder mehreren der vorhergehenden Ansprüche,
bei dem
ein Ereignis Verfügbarkeit einer Ressource bzw. deren Meldung als verfügbare Ressource ist.

## Claims

1. Process for situation-related automatic deployment or activation of resources for completion of jobs, where ongoing optimisation-simulation from a series of resources available for executing specified jobs occurs in such a manner that
- in the case of an event occurring or existing at a point in time, resources relevant to this event are checked for their suitability and immediate or future availability for jobs to be executed according to priority and,
- on an ongoing basis, taking into account the entire situation and using underlying criteria necessary for executing jobs, first optionally determines the optimal job sequence at each point in time for each resource, in order to subsequently either
- select an available resource for the best possible job at the time of its availability, to deploy the resource and then to activate it for executing the job, or
- to select an already activated resource for a job of higher priority, using criteria functional to the jobs, to deploy the resource and then to activate it for executing the job.

2. Process in accordance with Claim 1,
in which
the event in question is triggered independently or manually according to a specified schedule from stored data or at certain times by means of exceeding limit values.

3. Process in accordance with Claim 1 or 2,
in which
the events are formed from data generated by technical facilities independently or through manual activation of input elements.

4. Process in accordance with one or more of the previous Claims,
in which
after occurrence of an event, from stored master data independently a check is made for their relevance to the event and in the case of positive results, the resources are made available for deployment decision with event-related data.

5. Process in accordance with one or more of the previous Claims,
in which
event data standardised and classified by master data as jobs for operating sequences are subject to optional planning which constantly, from formal job criteria, determine those which must be executed within a selected period of time.

6. Process in accordance with one or more of the previous Claims,
in which
resources, when they are available and have been intended or set up to generate a corresponding message which is evaluated by optimisation-simulation for generation of a deployment decision.

7. Process in accordance with one or more of the previous Claims,
in which
the resources in each case generate a message at commencement of their availability and at the end of one of the jobs which they have carried out and in the case of interruption information as well as of unscheduled interruption and upon lapse of availability.

8. Process in accordance with one or more of the previous Claims,
in which
through optimisation-simulation. dynamic priorities of all optional jobs are constantly being determined for the period of time selected and taking into account current job and resource properties at the time of availability notice of the resources deployment decisions are made independently and the selected jobs are forwarded to such resources for execution.

9. Process in accordance with one or more of the previous claims,
in which
by means of manual data input, implementation deadlines are deployed with allocation of resources.

10. Process in accordance with one or more of the previous Claims,
in which
the deployment decision for activation of resources can be suspended by retraction of the necessary conditional data required for resource activation.

11. Process in accordance with one or more of the previous Claims,
in which
a series of selectable release flags are allocated to jobs for resources, which are checked for their availability prior to forwarding the job to the resources, and that in the event that one or more release flags are missing, conditional release occurs for a specified period of time, within which, upon the lapse of one or more of the missing criteria a deployment decision is not prevented for the job in question.

12. Process in accordance with one or more of the previous Claims,
in which
jobs for resources can be cancelled by input of corresponding data and their processing by means of optimisation-simulation.

13. Process in accordance with one or more of the previous Claims,
in which
the resources are divided up into classes according to their properties for executing jobs.

14. Process in accordance with Claim 13,
in which
each resource has at least one main class relating to its particular suitability for the operating sequence in question and possibly also sub-classes relating to at least less suitability for a job than at least another resource, which is allocated to the main class for this operating sequence.

15. Process in accordance with one or more of the previous Claims,
in which
the resources in each case execute a certain job at a certain time.

16. Process in accordance with one or more of the previous Claims,
in which
the resources can be stationary or mobile.

17. Process in accordance with one or more of the previous Claims,
in which
as criteria for optimisation, costs and/or meeting deadlines and/or work load and/or quality of the job are selected.

18. Process in accordance with one or more of the previous Claims,
in which
data from a job executed are compared with specified job data and that from discrepancies correction factors for optimising operating sequences are determined.

19. Process in accordance with one or more of the previous Claims,
in which
jobs manifest one or more interruption criteria which are taken into account when allocating priorities.

20. Process in accordance with one or more of the previous Claims,
in which
an event is the availability of a resource or its notification as an available resource.

## Revendications

1. Procédé d'ordonnancement automatique ou d'activation de ressources suivant une situation, pour exécuter des tâches, selon lequel on fait une simulation d'optimisation continue d'une série de ressources existant pour l'exécution de tâches prédéterminées de façon que
- pour un événement qui existe ou se produit à un instant, on vérifie les ressources concernées par cet événement pour déterminer leur aptitude et leur disponibilité immédiate ou future pour exécuter des tâches prioritaires, et
- en continu, en tenant compte de la situation globale et à partir de l'établissement de critères nécessaires pour l'exécution des tâches, on détermine tout d'abord l'ordonnancement de la succession des tâches, optimales, à chaque instant pour chaque ressource pour alors sélectionner
- soit une ressource disponible pour la tâche la mieux disponible à cet instant, pour disposer de la ressource puis activer l'exécution de la tâche
- soit une ressource déjà activée en utilisant les critères les plus appropriés pour les tâches, pour une tâche de priorité la plus élevée, disposer des ressources puis activer l'exécution de la tâche.

2. Procédé selon la revendication 1,
selon lequel
l'événement respectif est déclenché automatiquement ou manuellement, selon une chronologie prédéterminée, à partir de données en mémoire ou à des instants définis par des dépassements de seuils.

3. Procédé selon la revendication 1 ou 2,
selon lequel
on forme les événements à partir de données générées automatiquement par des installations techniques ou par l'actionnement manuel d'éléments d'entrée.

4. Procédé selon une ou plusieurs des revendications précédentes,
selon lequel
après l'arrivée d'un événement, à partir de données de base en mémoire, on vérifie automatiquement la pertinence des ressources pour l'événement et, en cas de résultat d'examen positif, on rend disponible avec les données rapportées à l'événement pour la décision d'ordonnancement.

5. Procédé selon l'une ou plusieurs des revendications précédentes,
selon lequel
les données des événements, normées par des données de base et classifiées comme tâches pour l'exécution d'opérations, sont soumises à une planification d'ordonnancement qui, en permanence, détermine les tâches selon des critères formels des tâches qui doivent être exécutées à l'intérieur de la période considérée, choisie.

6. Procédé selon l'une ou plusieurs des revendications précédentes
selon lequel
les ressources, lorsqu'elles sont libres pour les tâches et sont définies ou sont installées pour celles-ci, génèrent un signalement correspondant qui est exploité par la simulation d'optimation pour générer la décision automatique d'ordonnancement.

7. Procédé selon une ou plusieurs des revendications précédentes,
selon lequel
les ressources génèrent chaque fois un signalement au début de la disponibilité et à la fin d'une tâche qu'elles ont exécutée et en cas d'information d'interruption ainsi que pour une interruption hors planification et en cas de disparition de la disponibilité.

8. Procédé selon une ou plusieurs des revendications précédentes,
selon lequel
par une simulation d'optimisation, on détermine en permanence les priorités dynamiques de toutes les tâches d'ordonnancement pour l'intervalle de temps d'exécution choisi, et en tenant compte des propriétés actuelles de tâches et de ressources, à l'instant du signalement de disponibilité des ressources, on prend automatiquement des décisions d'ordonnancement et on transmet les tâches sélectionnées pour leur exécution.

9. Procédé selon l'une ou plusieurs des revendications précédentes,
selon lequel
on organise les délais d'exécution en les associant aux ressources en procédant par entrée manuelle des données.

10. Procédé selon une ou plusieurs des revendications précédentes,
selon lequel
la décision d'ordonnancement pour activer les ressources est mise en sursis par le retrait des données de condition nécessaires à l'activation des ressources.

11. Procédé selon l'une ou plusieurs des revendications précédentes,
selon lequel
on associe aux tâches, pour les ressources, une série de caractéristiques de libération, sélectionnée, et on vérifie leur existence avant de transmettre la tâche à la ressource respective et
si un ou plusieurs critères de libération font défaut, on fait une libération conditionnelle pendant une durée prédéterminée, à l'intérieur de laquelle, en cas de disparition du ou des critères manquants, on n'interdit pas une décision d'ordonnancement pour la tâche respective.

12. Procédé selon l'une ou plusieurs des revendications précédentes,
selon lequel
les tâches pour les ressources peuvent être bloquées par l'entrée de données correspondantes et leur traitement par la simulation d'optimisation.

13. Procédé selon une ou plusieurs des revendications précédentes,
selon lequel
les ressources sont réparties en classes, selon leurs propriétés, pour l'exécution des tâches.

14. Procédé selon la revendication 13,
selon lequel
à chaque ressource on attribue au moins une classe principale qui concerne son adaptation particulière à la tâche respective et le cas échéant on associe à cette classe principale, des sous-classes pour une moindre adaptation à une tâche qu'au moins une autre ressource associée, pour cette exécution du travail.

15. Procédé selon une ou plusieurs des revendications précédentes,
selon lequel
les ressources exécutent chaque fois une tâche déterminée à un instant déterminé.

16. Procédé selon l'une ou plusieurs des revendications précédentes,
selon lequel
les ressources peuvent être fixes ou mobiles.

17. Procédé selon l'une quelconque des revendications précédentes,
selon lequel
pour l'optimisation, on sélectionne comme critère, le coût et/ou le respect du délai et/ou l'occupation et/ou la qualité de la tâche.

18. Procédé selon l'une quelconque des revendications précédentes,
selon lequel
on compare les données d'une tâche exécutée à des données prédéterminées d'une tâche non encore exécutée et
à partir des différences on détermine des coefficients de correction pour optimiser les tâches futures.

19. Procédé selon l'une quelconque des revendications précédentes,
selon lequel
les tâches ont un ou plusieurs critères d'interruption pris en compte à l'attribution des priorités.

20. Procédé selon l'une quelconque des revendications précédentes,
selon lequel
un événement est la disponibilité d'une ressource ou son signalement comme ressource disponible.
